# FASCICULE DE BREVET EUROPEEN

(11) **EP 3 396 822 B1**
(45) Date de publication et mention de la délivrance du brevet: **15.07.2026**
(21) Numéro de dépôt: 18164580.5
(22) Date de dépôt: 28.03.2018
(51) Int. Cl.: H02K 15/03, H02K 1/17, H02K 1/278, H02K 1/2789, H01F 7/02

(54) **SYSTÈME DE FREINAGE COMPRENANT DES AIMANTS**
BREMSSYSTEM, DAS MAGNETE UMFASST
BRAKING SYSTEM COMPRISING MAGNETS

(30) Priorité: 27.04.2017 FR 1753702
(43) Date de publication de la demande: 31.10.2018
(73) Titulaire: Astemo France, 93700 Drancy (FR)
(72) Inventeur: AYACHE, Marc, 75002 PARIS (FR); PASQUET, Thierry, 94700 VINCENNES (FR); BOURLON, Philippe, 77230 DAMMARTIN EN GOELE (FR)
(74) Mandataire: LLR

(56) Documents cités:
- EP-A1- 0 996 212
- EP-A1- 1 605 574
- DE-U1- 9 421 107
- ES-A1- 2 387 433
- JP-A- 2007 028 725
- JP-A- H08 223 838
- US-A- 5 734 216
- US-A1- 2015 089 794
- GE TOSHIBA: "One Component, Heat Curable Silicone Adhesive", 1 April 2000 (2000-04-01), XP055752970, Retrieved from the Internet <URL:http://mail.euzion.com.tw/data/TSE322.pdf> [retrieved on 20201123]

## Description

Un moteur électrique convertit l'énergie électrique en énergie mécanique. Cette énergie mécanique peut se traduire par le produit d'un couple par un déplacement angulaire (rotation) pour les moteurs électriques rotatifs tandis que les moteurs linéaires produisent une énergie mécanique correspondant au produit d'une force par un déplacement linéaire.

Un moteur électrique comprend un stator et un rotor. Le rotor est la partie mobile par rapport au stator. Généralement, il comprend un ensemble de bobines reliées à un collecteur rotatif. Dans un moteur électrique à aimant permanent, le courant passant dans les enroulements du rotor provoque un champ magnétique qui réagit avec celui permanent du stator pour faire tourner l'arbre central.

Le stator est la partie stationnaire du moteur. Selon la configuration de la machine, le stator peut créer un champ magnétique qui par interaction avec le champ magnétique rotorique produit le couple électromécanique. Le stator est ainsi, généralement, pourvu d'aimants qui peuvent être des d'aimants permanents ou des électroaimants.

Il est donc nécessaire d'équiper le stator ou le rotor d'aimants lors de sa conception en les fixant à la carcasse du stator ou du rotor.

Pour une conversion optimale de l'énergie électrique en énergie mécanique, les aimants doivent être positionnés à des endroits précis de la carcasse dans une orientation précise et unique à chaque aimant. Pour cela, on fixe un à un tous les aimants à la carcasse.

Mais la géométrie des carcasses de rotor ou de stator rend la fixation difficile pour l'opérateur. Il doit s'adapter à chaque géométrie et à chaque type d'aimants. De plus, s'il s'agit d'aimants permanents, ils sont magnétisés lors de leur fixation au sein de la carcasse, ce qui rend leur maniement difficile.

Une bande souple sur laquelle sont fixés des aimants et des entretoises par collage est divulguée dans US 2015/0089794 A1.

Un but de l'invention est de faciliter la fabrication des moteurs électriques.

A cet effet, on prévoit selon l'invention un ensemble selon la revendication 1.

Grace à un tel ensemble, il est possible de positionner tous les éléments ferromagnétiques sur la bande, puis de tous les fixer à celle-ci avant d'assembler la bande à un support, par exemple la carcasse d'un rotor ou d'un stator. L'opérateur peut donc réaliser les étapes de positionnement et de fixation à plat sur un plan de travail. Son confort de travail et sa sécurité s'en trouvent grandement améliorés. Il est possible de fabriquer la bande à l'avance et de la stocker sous forme de rouleau ou de bobine. Un autre avantage technique de la solution est que différents types d'éléments ferromagnétiques peuvent être utilisés pour une même bande. Un même rouleau peut donc servir à équiper différents moteurs. Inversement, le rouleau peut être réalisé sur mesure en fonction de l'agencement prévu pour les aimants d'un moteur particulier en étant dédié à celui-ci. Ainsi, un même opérateur peut réaliser une étape de fabrication d'un plus grand nombre différents de types de moteur électrique. Enfin, comme l'étape de fixation des aimants à la bande et l'étape de fixation des aimants à la carcasse ne se déroulent pas simultanément, on permet un séquençage des étapes de fabrication du moteur, synonyme de gains temporel et économique.

Grâce aux moyens de collage, la bande est plus facile à assembler sur un support.

De manière préférentielle, les éléments ferromagnétiques sont disposés avec un pas constant le long de la bande.

De manière préférentielle, les éléments ferromagnétiques forment des groupes d'au moins deux éléments ferromagnétiques, ces groupes étant disposés avec un pas constant le long de la bande.

Les entretoises servent à maintenir en position les éléments ferromagnétiques.

On prévoit également selon l'invention un ensemble dans lequel les éléments ferromagnétiques forment des aimants permanents.

On peut prévoir un organe de moteur électrique, tel qu'un stator ou un rotor, qui comprend un ensemble selon l'invention.

On peut prévoir un moteur électrique équipé d'un tel organe.

Avantageusement, le moteur est également équipé d'un blindage magnétique.

Ce blindage magnétique peut être réalisé grâce à tout type de matériau ferromagnétique présentant une susceptibilité magnétique élevée et un champ coercitif faible. Par exemple, le matériau utilisé peut être le fer, le nickel, le cobalt ou des assemblages de différents matériaux tels que le fer-silicium ou encore ceux commercialisés sous les noms de Mumétal, de Supermumétal, de Cryophy, de Supra50, et de Supra36 par Aperam.

On prévoit également, selon la revendication 5, un système de freinage équipé de freins et d'un tel moteur électrique.

On prévoit également selon la revendication 6 un procédé de fabrication d'un moteur électrique.

Avantageusement, le procédé comprend une étape ultérieure selon laquelle on magnétise les éléments ferromagnétiques de sorte que ceux-ci deviennent des aimants permanents.

Ainsi, ce n'est qu'à la dernière étape du procédé de fabrication que les éléments ferromagnétiques sont aimantés. Leur manipulation dans toutes les étapes précédant l'aimantation s'en trouve grandement améliorée.

Avantageusement, l'étape de fixation comprend un sertissage.

Selon l'invention, le collage est réalisé grâce à une colle polymérisable à la chaleur. La température de polymérisation est supérieure ou égale à 70°C, de préférence à 100°C, de manière encore plus préférentielle à 150°C.

Par ailleurs, avantageusement, le collage est réalisé grâce à une colle souple, de manière préférentielle une colle souple formée d'élastomères.

Avantageusement, l'étape de fixation de la bande au stator ou au rotor est réalisée par des moyens de collage.

La fixation par collage permet de ne pas altérer la structure mécanique du rotor ou du stator et n'influence pas son comportement électromagnétique.

On prévoit également, selon l'invention, un procédé de fabrication d'un système de freinage comprenant un procédé de fabrication de moteur électrique selon l'invention.

On prévoit également que le procédé de fabrication du moteur électrique selon l'invention comprend une étape au cours de laquelle on réalise un blindage magnétique du moteur.

Nous allons maintenant présenter un mode de réalisation de l'invention donné à titre d'exemple non limitatif et à l'appui des figures annexées sur lesquelles :
- la figure 1 est une vue de dessus de la bande souple selon un mode de réalisation de l'invention ;
- la figure 2 est une vue à plus grande échelle d'une partie de la bande de la figure 1;
- la figure 3 est une vue en perspective d'un organe de moteur électrique équipé de la bande de la figure 1;
- la figure 4 est une vue en coupe axiale de l'organe représenté à la figure 3.
- la figure 5 est un schéma représentant un système de freinage équipé d'un moteur électrique équipé de l'organe de moteur électrique illustré aux figures 3 et 4.

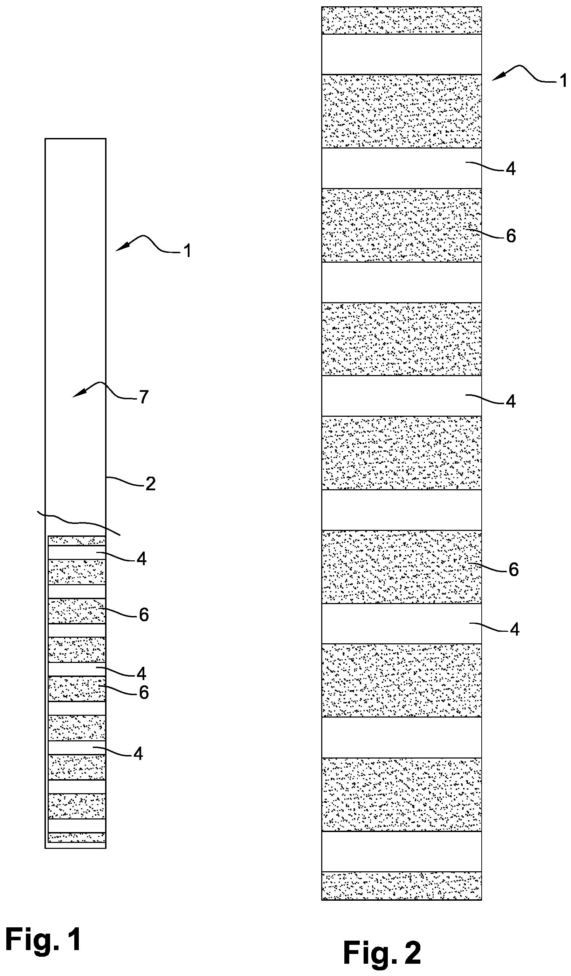

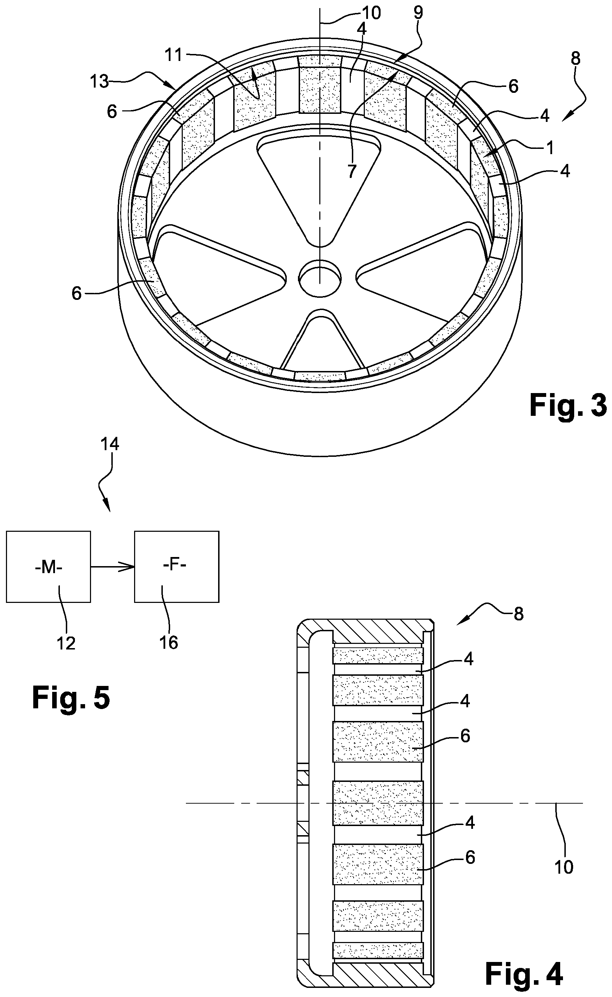

La figure 1 présente un ensemble 1 selon le présent mode de réalisation. Il comporte une bande flexible souple 2 à laquelle sont fixés des éléments ferromagnétiques 4 et des entretoises 6. La bande peut être en matière plastique, en résine, en silicone ou en acier inoxydable. Elle présente à l'origine une forme plane rectangulaire allongée. La bande est souple de sorte qu'elle est capable d'être enroulée à l'intérieur d'un support tel qu'illustré à la figure 3.

Selon le mode de réalisation représenté à la figure 2, les éléments ferromagnétiques 4 sont ici identiques entre eux. En l'espèce, ils ont une forme de parallélépipède rectangle. Ils sont disposés à pas constant le long de la direction longitudinale de la bande 2. Selon ce mode de réalisation, les éléments ferromagnétiques sont disposés en groupe unitaire le long de la bande. Cependant, il est possible de disposer les éléments ferromagnétiques selon des groupes d'éléments formés par au moins deux éléments, leur nombre relevant du choix arbitraire de l'homme du métier. Ainsi, on peut avoir deux éléments 4 proches l'un de l'autre, distants du groupe suivant de deux éléments 4, et ainsi de suite.

Les entretoises 6 sont ici disposées en alternance avec les éléments ferromagnétiques 4. Avantageusement une entretoise est disposée entre chaque élément ferromagnétique et inversement.

En présence de groupes d'au moins deux éléments ferromagnétiques, il est également possible de disposer au moins une entretoise dans chaque groupe d'éléments ferromagnétiques et/ou entre les groupes.

Les éléments ferromagnétiques et/ou les entretoises sont ici tous disposés sur une même face 7 de la bande. Mais on peut prévoir sinon qu'ils sont répartis sur les deux faces opposées 7 et 9 de la bande.

La figure 1 illustre le fait que la bande n'est pas nécessairement adaptée à un type précis d'élément ferromagnétique 4 et/ou d'entretoise 6. En effet, il est possible de fixer n'importe quel type d'éléments ferromagnétique et/ou d'entretoises à la bande souple selon l'invention. Autrement dit, la bande n'est pas conçue de manière exclusive pour un type d'éléments ferromagnétiques et/ou un type d'entretoises.

La bande est dotée de moyens de fixation. Ces moyens de fixation sont des adhésifs, sous forme de colle, ci présente sur les deux faces 7 et 9.

Sur la bande de la figure 2, les éléments ferromagnétiques ne forment pas encore des aimants permanents.

Les figures 3 et 4 représentent un organe 8 de moteur électrique, tel qu'un stator ou un rotor, équipé d'un ensemble 1, à savoir d'une bande souple 2 et d'éléments ferromagnétiques 4 fixés à la bande 2.

Les éléments ferromagnétiques sont donc fixés à la bande qui est elle-même fixée à un support, ici un rotor ou un stator. Le rotor ou stator a une forme cylindrique à section circulaire dans un plan perpendiculaire à l'axe 10 du cylindre.

Dans ce mode de réalisation d'un organe 8 de moteur électrique 12, la bande souple est fixée à l'intérieur de l'organe sur une face interne 11 de l'organe. Elle s'étend tout au long de la circonférence de cette face 11 en s'y adaptant grâce à sa souplesse. Elle forme ainsi un tour autour de l'axe 10. Elle réalise aussi avec sa face 9 un contact surfacique avec la face interne 11 du rotor ou du stator.

Ici, l'organe 8 est un organe de moteur électrique rotatif 12 de par l'agencement circonférentiel de la bande sur la face interne de l'organe 8. Bien entendu, le moteur électrique peut être linéaire. Dans ce cas, le stator et le rotor sont plans, auquel cas la bande souple à laquelle sont fixés des éléments ferromagnétiques et/ou des entretoises est fixée dans un plan.

Le moteur électrique 12 peut équiper un système de freinage 14 de roue de véhicule, tel que représenté schématiquement à la figure 5. Dans ce système de freinage 14, des freins 16 sont actionnés grâce à l'énergie fournie par le moteur électrique 12.

Un procédé de fabrication du moteur électrique 12 est par exemple comme suit.

Selon ce procédé, l'ensemble 1 est initialement hors de son support final. L'opérateur a donc tout le confort de réaliser les étapes suivantes.

La bande 2 s'étendant à plat sur un plan de travail, il positionne les éléments ferromagnétiques 4 sur la bande 2 conformément à la géométrie finale de la bande sur son support final, par exemple la carcasse d'un rotor ou d'un stator. Dans le cas où le support est un rotor ou un stator, les éléments ferromagnétiques, une fois aimantés, réagiront au champ magnétique crée par le courant électrique parcourant le bobinage du moteur électrique. Ils doivent donc être positionnés de manière la plus précise qui soit. Ce positionnement précis peut, par exemple, consister à positionner les groupes d'éléments ferromagnétiques à pas constant le long de la bande souple. Il est également possible de positionner les éléments ferromagnétiques selon un motif élémentaire reproduit à pas constant ou non le long de la bande. Par exemple, un groupe de deux éléments ferromagnétiques peut succéder à un groupe de trois éléments ferromagnétiques. Autrement dit les groupes d'éléments ferromagnétiques ne contiennent pas nécessairement le même nombre d'éléments ferromagnétiques. Les éléments ferromagnétiques peuvent également être orientés selon une polarité opposée au sein d'un même groupe ou alternativement d'un groupe à l'autre.

L'opérateur fixe une ou plusieurs entretoises 6 entre chaque groupe d'éléments ferromagnétiques 4, unitaire ou non.

L'étape de positionnement achevée, l'opérateur fixe les éléments ferromagnétiques 4 à la bande souple 2. Il peut procéder par sertissage des éléments ferromagnétiques 4. Il utilise des moyens de collage pour fixer les éléments ferromagnétiques à la bande. La colle est souple et polymérisable à la chaleur à une température à laquelle la colle est activée et permet un maintien durable des éléments ferromagnétiques 4 à la bande souple 2. Ainsi, plus la température augmente, plus la chaleur reçue par la colle est importante, et donc plus la fixation entre les éléments ferromagnétiques 4 et la bande souple 2, réalisée par la colle polymérisable, est forte. Ainsi, une température d'exposition supérieure à 70°C, supérieure à 100°C ou encore supérieure à 150°C, permet que les éléments 4 soient fixés à la bande 2. Cependant, la température d'exposition ne doit pas dépasser la température de démagnétisation des éléments ferromagnétiques 4, aussi appelée température de Curie d'un matériau. La colle utilisée est donc choisie en conséquence. En effet, à cette température spécifique d'un matériau ferromagnétique, par exemple celui des éléments 4, celui-ci perd son aimantation permanente. Ainsi, tant que la chaleur émise par le moteur ne conduit pas à l'atteinte de la température de Curie des éléments 4, leur fixation à la bande souple 2, grâce à la colle polymérisable, est préservée par la chaleur du moteur. Un autre avantage permis par l'utilisation d'une colle souple est l'amortissement des vibrations et des bruits émis par le fonctionnement du moteur.

Les entretoises sont fixées également à la bande souple 2. Pour ce faire, il utilise des mêmes moyens de fixation utilisés pour les éléments ferromagnétiques.

A ce stade du procédé, la bande souple 2 est dotée d'éléments ferromagnétiques 4 et d'entretoises 6 fixés sur une de ses faces ou les deux. Dans un tel état, la bande peut se présenter sous la forme d'un rouleau ou d'une bobine.

La bande est apte à être assemblée directement sur un support : au besoin l'opérateur a adapté la longueur de la bande souple 2 au support final sur lequel elle sera fixée. A la figure 1, on a illustré de manière schématique le fait que l'opérateur découpe une portion de bande souple 2 sur laquelle sont fixés des éléments ferromagnétiques 4 et des entretoises 6.

L'opérateur installe et fixe à présent l'ensemble 1 à un rotor ou un stator du moteur électrique 12. Il peut utiliser de moyens de collage pour fixer la bande souple 2 au rotor ou au stator. Par exemple, il est possible qu'une face ou les deux faces de la bande soient adhésives auquel cas il suffit d'appliquer une face sur une partie réceptrice du rotor ou du stator pour fixer la bande souple 2 au rotor ou au stator.

La bande souple à présent fixée au stator ou au rotor, l'opérateur magnétise les éléments ferromagnétiques de sorte que ceux-ci deviennent des aimants permanents. Après cette étape, les éléments ferromagnétiques 4 sont aptes à être entrainés par un champ magnétique et peuvent donc convertir de l'énergie électrique en énergie mécanique.

Ce procédé de fabrication du moteur 12 peut comprendre une étape de blindage magnétique du moteur. Un tel blindage magnétique peut être réalisé grâce à un matériau ou un assemblage de matériaux présentant une susceptibilité magnétique élevée et un champ coercitif le plus faible possible. En effet, la susceptibilité magnétique décrit l'intensité de la réponse du matériau à une excitation magnétique. Un matériau présentant une susceptibilité magnétique élevée aura donc tendance à concentrer les lignes de champ magnétique en son sein et ainsi empêcher celles-ci de se déployer au-delà. D'autre part, il est important que le champ coercitif du matériau choisi soit le plus faible possible, afin d'éviter les effets d'hystérésis et notamment afin que le blindage magnétique soit efficace dès les champs les plus faibles. Ainsi, les matériaux éligibles sont par exemple le fer pur, le fer doux, le cobalt, le nickel, le cuivre ou les assemblages de métaux incluant des métaux choisis parmi le fer, le nickel, le molybdène, le cuivre, le silicium etc... A titre d'exemple, les alliages suivants commercialisés par la société Aperam sous le nom de Mumétal (Ni₈₀FeMo₅), de SuperMumétal (Ni₈₀FeMo₅), de Cryophy (Ni₈₁FeMo₅), de Supra50 (FeNi₄₈) ou encore de Supra36 (FeNi₃₆) sont éligibles.

En pratique, le procédé de blindage comprend une étape d'isolement du dispositif à protéger, ici le moteur électrique 12, au sein d'une enceinte formée par le matériau de blindage. Cette enceinte représente le blindage du dispositif. Elle peut présenter de nombreuses formes ou géométries. Cependant on privilégie souvent les formes sphériques, cylindriques ou les angles arrondis aux arrêtes tranchantes. L'épaisseur du blindage et le nombre de couches successives le formant sont également des paramètres choisis selon les circonstances. Un tel blindage permet d'isoler les éléments ferromagnétiques 4 des champs environnants et/ou d'empêcher que le moteur ne perturbe le champ magnétique environnant avec le sien. Les éléments ferromagnétiques 4 ayant une aimantation déterminée spécifiquement en fonction des besoins du moteur et des performances attendues, le blindage permet de préserver les performances du moteur ou encore de prévenir tout dysfonctionnement du moteur.

Ce procédé de fabrication du moteur 12 et les étapes qui le composent présentent plusieurs avantages.

Premièrement, comme explicité plus haut, les étapes de positionnement des éléments ferromagnétiques et des entretoises sur la bande et de fixation à la bande à son support peuvent être disjointes. Cette disjonction offre plus de confort pour l'opérateur. Il peut travailler sur un plan de travail, et non directement sur la carcasse du rotor ou du stator qui présente souvent une géométrie peu avantageuse pour la manutention. De plus, les éléments ferromagnétiques n'étant pas encore magnétisés, leur maniement est plus aisé.

L'étape de fixation des éléments ferromagnétiques et des entretoises à la bande est elle aussi plus aisée grâce à ce procédé. Beaucoup plus de moyens de fixation peuvent être utilisés puisque l'opérateur n'est pas limité par l'encombrement de la carcasse tel que cela peut être le cas dans les technologies actuelles.

La disjonction possible des étapes de positionnement et de fixation permet à plusieurs opérateurs d'intervenir au cours de la fabrication du moteur électrique. Il est également possible de stocker des bandes souples 2 aptes à être directement assemblées pour un usage futur. Ce procédé offre donc plus de flexibilité dans la gestion logistique des usines de fabrication de moteurs électriques et donc in fine de systèmes de freinage. De plus, les moyens de collage s'adaptent plus facilement à tous les types de matériau possibles utilisables pour la bande souple, à savoir : en matière plastique, en résine, en silicone ou en métal, par exemple en acier inoxydable.

L'invention n'est pas limitée aux modes de réalisation présentés et d'autres modes de réalisation apparaîtront clairement à l'homme du métier. Il est notamment possible d'adapter l'invention à une quelconque machine tournante, par exemple un alternateur.

### Liste des références utilisées :

1 : ensemble
2 : bande souple
4 : éléments ferromagnétiques
6 : entretoise
7 : une face
9 : l'autre face
10 : axe
11 : face interne du rotor ou du stator
12 : moteur électrique
14 : système de freinage
16 : frein

## Revendications

1. Ensemble (1) comprenant :
- une bande souple (2) ayant une première face et une deuxième face, la bande étant dotée d'au moins un adhésif, et
- des éléments ferromagnétiques (4) fixés à l'une desdites faces de la bande (2) à l'aide de l'adhésif et séparés entre eux par au moins une entretoise (6),
l'ensemble étant dans une configuration telle qu'une partie au moins d'une desdites faces de la bande est apte à être assemblée directement à un support grâce à des moyens de collage,
la bande (2) étant conçue pour recevoir différents types d'éléments ferromagnétiques et/ou différents types d'entretoises et réalisée dans un matériau choisi parmi la liste suivante : matière plastique, résine, silicone, acier inoxydable,
**caractérisé en ce que** l'adhésif est une colle souple polymérisable à une chaleur supérieure à 70°C.

2. Ensemble selon la revendication précédente dans lequel les éléments ferromagnétiques (4) sont disposés avec un pas constant le long de la bande (2).

3. Ensemble selon l'une des revendications 1 à 2 dans lequel les éléments ferromagnétiques (4) forment des groupes d'au moins deux éléments ferromagnétiques, ces groupes étant disposés avec un pas constant le long de la bande (2).

4. Ensemble selon l'une des revendications précédentes dans lequel les éléments ferromagnétiques forment des aimants permanents.

5. Système de freinage (14) équipé d'un moteur électrique (12), **caractérisé en ce qu'**il comprend :
- un organe (8) du moteur électrique (12), tel qu'un stator ou un rotor,
- un ensemble tel que défini à l'une quelconque des revendications 1 à 4.

6. Procédé de fabrication d'un moteur électrique comprenant les étapes selon lesquelles :
- on fixe des éléments ferromagnétiques (4) séparés entre eux par au moins une entretoise (6) à l'une des faces d'une bande souple (2), la bande (2) ayant une première face et une deuxième face, à l'aide d'un adhésif, puis
- on installe la bande (2) sur un stator ou un rotor du moteur électrique grâce à des moyens de collage,
**caractérisé en ce que** l'adhésif étant une colle souple polymérisable à une chaleur supérieure à 70°C,
la bande (2) étant conçue pour recevoir différents types d'éléments ferromagnétiques et/ou différents types d'entretoises et réalisée dans un matériau choisi parmi la liste suivante : matière plastique, résine, silicone, acier inoxydable.

7. Procédé selon la revendication précédente comprenant une étape ultérieure selon laquelle on magnétise les éléments ferromagnétiques (4) de sorte que ceux-ci deviennent des aimants permanents.

8. Procédé selon l'une des revendications 6 ou 7 selon lequel l'étape de fixation comprend un sertissage.

9. Procédé selon au moins l'une des revendications 6 ou 7, selon lequel on fixe au moins une entretoise (6) entre certains des éléments ferromagnétiques (4).

10. Procédé de fabrication d'un système de freinage (14) comprenant un procédé de fabrication de moteur électrique (12) selon l'une des revendications 6 à 9.

## Patentansprüche

1. Anordnung (1), umfassend:
- ein flexibles Band (2), das eine erste Fläche und eine zweite Fläche aufweist, wobei das Band mit mindestens einem Klebeband versehen ist, und
- ferromagnetische Elemente (4), die unter Verwendung des Klebebandes an einer der Flächen des Bandes (2) befestigt sind und durch mindestens einen Abstandshalter (6) getrennt sind,
wobei die Anordnung in einer derartigen Konfiguration ist, dass ein Abschnitt mindestens einer der Flächen des Bandes mit Hilfe von Klebemitteln direkt an einer Halterung montierbar ist,
wobei das Band (2) ausgebildet ist, um verschiedene Typen von ferromagnetischen Elementen und/oder verschiedene Typen von Abstandshaltern aufzunehmen, und aus einem Material ist, das aus der folgenden Liste ausgewählt ist: Kunststoff, Harz, Silikon, rostfreier Stahl,
**dadurch gekennzeichnet, dass** das Klebeband ein flexibler Klebstoff ist, der bei einer Wärme größer als 70 °C polymerisierbar ist.

2. Anordnung nach dem vorhergehenden Anspruch, wobei die ferromagnetischen Elemente (4) mit einem konstanten Abstand entlang des Bandes (2) angeordnet sind.

3. Anordnung nach einem der Ansprüche 1 bis 2, wobei die ferromagnetischen Elemente (4) Gruppen von mindestens zwei ferromagnetischen Elementen bilden, wobei diese Gruppen mit einem konstanten Abstand entlang des Bandes (2) angeordnet sind.

4. Anordnung nach einem der vorhergehenden Ansprüche, wobei die ferromagnetischen Elemente Dauermagnete bilden.

5. Bremssystem (14), versehen mit einem Elektromotor (12), **dadurch gekennzeichnet, dass** es umfasst:
- ein Element (8) des Elektromotors (12), wie ein Stator oder ein Rotor,
- eine Anordnung nach einem der Ansprüche 1 bis 4.

6. Verfahren zur Herstellung eines Elektromotors, umfassend die folgenden Schritte:
- Befestigen der ferromagnetischen Elemente (4), die durch mindestens einen Abstandshalter (6) voneinander getrennt sind, unter Verwendung eines Klebebands an einer der Flächen eines flexiblen Bandes (2), wobei das Band (2) eine erste Fläche und eine zweite Fläche aufweist, und anschließend
- Installieren des Bandes (2) auf einem Stator oder einem Rotor des Elektromotors mit Hilfe von Klebemitteln,
**dadurch gekennzeichnet, dass** das Klebeband ein flexibler Klebstoff ist, der bei einer Wärme größer als 70 °C polymerisierbar ist,
wobei das Band (2) ausgebildet ist, um verschiedene Typen von ferromagnetischen Elementen und/oder verschiedene Typen von Abstandshaltern aufzunehmen, und aus einem Material ist, das aus der folgenden Liste ausgewählt ist: Kunststoff, Harz, Silikon, rostfreier Stahl.

7. Verfahren nach dem vorhergehenden Anspruch, umfassend einen weiteren Schritt des Magnetisierens der ferromagnetischen Elemente (4), so dass diese Dauermagnete werden.

8. Verfahren nach einem der Ansprüche 6 oder 7, wobei der Schritt des Befestigens ein Crimpen umfasst.

9. Verfahren nach mindestens einem der Ansprüche 6 oder 7, wobei mindestens ein Abstandshalter (6) zwischen bestimmten der ferromagnetischen Elemente (4) befestigt wird.

10. Verfahren zur Herstellung eines Bremssystems (14), umfassend ein Verfahren zur Herstellung eines Elektromotors (12) nach einem der Ansprüche 6 bis 9.

## Claims

1. An assembly (1) comprising:
- a flexible strip (2) having a first face and a second face, the strip being provided with at least one adhesive, and
- ferromagnetic elements (4) secured to one of said faces of the strip (2) by means of the adhesive and separated from one another by at least one spacer (6),
the assembly being configured such that at least part of one of said faces of the strip is capable of being directly bonded to a substrate by means of adhesive,
the strip (2) being designed to accommodate different types of ferromagnetic elements and/or different types of spacers and made from a material selected from the following list: plastic, resin, silicone, stainless steel,
**characterised in that** the adhesive is a flexible adhesive polymerisable at a temperature above 70°.

2. Assembly according to the preceding claim, in which the ferromagnetic elements (4) are arranged at a constant pitch along the strip (2).

3. An assembly according to one of claims 1 to 2, wherein the ferromagnetic elements (4) form groups of at least two ferromagnetic elements, these groups being arranged at a constant pitch along the strip (2).

4. Assembly according to one of the preceding claims, in which the ferromagnetic elements form permanent magnets.

5. A braking system (14) equipped with an electric motor (12), **characterised in that** it comprises:
- a component (8) of the electric motor (12), such as a stator or a rotor,
- an assembly as defined in any of claims 1 to 4.

6. A method of manufacturing an electric motor comprising the steps of:
- ferromagnetic elements (4), separated from one another by at least one spacer (6), are fixed to one side of a flexible strip (2) - the strip (2) having a first side and a second side - using an adhesive, then
- the strip (2) is mounted on a stator or rotor of the electric motor by means of bonding,
**characterised in that** the adhesive is a flexible adhesive polymerisable at a temperature above 70°C,
the strip (2) being designed to accommodate different types of ferromagnetic elements and/or different types of spacers and being made of a material selected from the following list : plastic, resin, silicone, stainless steel.

7. A method according to the preceding claim, comprising a further step in which the ferromagnetic elements (4) are magnetised so that they become permanent magnets.

8. A method according to one of claims 6 or 7, wherein the fixing step comprises crimping.

9. A method according to at least one of claims 6 or 7, wherein at least one spacer (6) is fixed between some of the ferromagnetic elements (4).

10. A method of manufacturing a braking system (14) comprising a method of manufacturing an electric motor (12) according to any one of claims 6 to 9.
